# EUROPEAN PATENT APPLICATION

(11) **EP 4 819 469 A1**
(43) Date of publication of application: **07.10.2026**
(21) Application number: 26170200.5
(22) Date of filing: 01.04.2026
(51) Int. Cl.: H02M 1/42, H02M 1/00, H02M 1/44, H02M 3/156

(54) **POWER CONVERTING APPARATUS AND HOME APPLIANCE INCLUDING THE SAME**

(30) Priority: 04.04.2025 KR 20250044037
(71) Applicant: UNIST (Ulsan National Institute of Science and Technology), Ulsan 44919 (KR); LG Electronics Inc., Yeongdeungpo-gu Seoul 07336 (KR)
(72) Inventor: SONG, Youngjoon, 44919 Ulsan (KR); HWANG, Soonhwan, 07796 Seoul (KR); LEE, Minhyo, 07796 Seoul (KR); KIM, Sunghak, 07796 Seoul (KR); JUNG, Jeehoon, 44919 Ulsan (KR); HEO, Kyungwook, 44919 Ulsan (KR)
(74) Representative: Vossius & Partner Patentanwälte Rechtsanwälte mbB

(57) **Abstract**

In order to achieve the above objects, a power converting apparatus and a home appliance according to an embodiment of the present disclosure include: a rectifier configured to rectify input AC power; a converter including a switching element; a DC-link capacitor connected to an output terminal of the converter; and a converter controller configured to control the switching element, wherein the converter controller performs spread spectrum modulation (SSM) in which a switching frequency of the switching element is varied within a designated range, and performs active feed-forward compensation to eliminate a time-varying variable added to the input current in response to the performing of the spread spectrum modulation.

## Description

### BACKGROUND OF THE INVENTION

### 1. Field of the invention

The present disclosure relates to a power converting apparatus and a home appliance including the same, and more specifically, to a power converting apparatus capable of improving efficiency and a home appliance including the same.

### 2. Description of the Related Art

In general, electronic devices such as air conditioners are equipped with a power converting apparatus, which converts input power for operation.

An air conditioner is installed to provide a more comfortable indoor environment for humans by discharging cooled or heated air indoors to regulate the room temperature and purify the indoor air. Typically, an air conditioner includes an indoor unit, which is composed of a heat exchanger and installed indoors, and an outdoor unit, which is composed of a compressor, a heat exchanger, etc. and supplies refrigerant to the indoor unit.

A power converting apparatus is an apparatus that converts input power and supplies the converted power. Such a power converting apparatus may be disposed within a home appliance to convert the input power into power for driving the home appliance.

For example, the power converting apparatus may be disposed in an air conditioner to convert alternating current (AC) power into direct current (DC) power, thereby supplying the converted power to a load or driving a motor or the like.

Home appliances such as air conditioners are often provided with a power factor correction (PFC) unit to convert reactive power into active power, taking into account the characteristics of AC voltage.

For example, a prior art document (Korean Patent Publication No. 10-2004-0020760, published on March 9, 2004) discloses a power factor correction converter circuit for an inverter air conditioner.

Meanwhile, according to the international standard IEC 61000, regulations are established for harmonic reduction. Accordingly, various efforts have been made to reduce harmonics caused by input AC current.

### SUMMARY OF THE INVENTION

It is an object of the present disclosure to provide a power converting apparatus capable of reducing electromagnetic interference (EMI) noise and improving efficiency, and a home appliance including the same.

Another object of the present disclosure is to provide a power converting apparatus capable of minimizing distortion of input current through active compensation, and a home appliance including the same.

Another object of the present disclosure is to provide a power converting apparatus capable of efficiently performing power factor correction, and a home appliance including the same.

Another object of the present disclosure is to provide a power converting apparatus capable of correcting power factor while satisfying harmonic standards.

In order to achieve the above objects, a power converting apparatus and a home appliance according to an embodiment of the present disclosure may perform spread spectrum modulation (SSM) to effectively reduce EMI noise.

In order to achieve the above objects, a power converting apparatus and a home appliance according to an embodiment of the present disclosure may minimize distortion of input current through active compensation and improve efficiency.

In order to achieve the above objects, a power converting apparatus and a home appliance according to an embodiment of the present disclosure include a rectifier configured to rectify input AC power; a converter including a switching element; a DC-link capacitor connected to an output terminal of the converter; and a converter controller configured to control the switching element.

The converter controller performs spread spectrum modulation (SSM) in which a switching frequency of the switching element is varied within a designated range.

The converter controller performs active feed-forward compensation to eliminate a time-varying variable added to the input current in response to the performing of the spread spectrum modulation.

The converter controller may calculate a variable duty-cycle control feed-forward term based on a difference between a voltage command value and an input voltage, calculate an active feed-forward term including the time-varying variable, and calculate a feed-forward output value by multiplying the variable duty-cycle control feed-forward term and the active feed-forward term.

The converter controller may calculate a duty cycle by multiplying a proportional-integral (PI) controller output value with the feed-forward output value, the PI controller output value being based on a difference between the voltage command value and a measured voltage across the DC-link capacitor.

The converter controller may set an initial value of the voltage command value and lower an integral gain of the proportional-integral controller.

The active feed-forward term may be a value that follows a real-time switching frequency and is normalized to an average magnitude of 1.

The active feed-forward term may be the square root of the time-varying variable divided by a center frequency.

The converter controller may include a phase detector configured to detect a phase of the input voltage, and may calculate the variable duty-cycle control feed-forward term based on the phase of the input voltage.

The converter may further include an inductor and a diode connected to the inductor, wherein the switching element is a boost converter connected between the inductor and the diode.

The converter controller may operate the switching element in a discontinuous conduction mode.

The converter controller may perform variable duty-cycle control (VDC) in which the duty cycle is varied during a power frequency period.

In order to achieve the above objects, a power converting apparatus and a home appliance according to an embodiment of the present disclosure include: a rectifier configured to rectify input AC power; a converter including a switching element; a DC-link capacitor connected to an output terminal of the converter; and a converter controller configured to control the switching element, wherein the converter controller performs spread spectrum modulation (SSM) in which a switching frequency of the switching element is varied within a designated range, and performs active compensation based on real-time switching frequency information of the switching element.

The converter controller may calculate the active feed-forward term as the square root of the real-time switching frequency information divided by a center frequency.

The converter controller may calculate a variable duty-cycle control feed-forward term based on a difference between a voltage command value and an input voltage, calculate a feed-forward output value by multiplying the variable duty-cycle control feed-forward term with the active feed-forward term, and calculate a duty cycle by multiplying the feed-forward output value with a proportional-integral controller output value, the PI controller output value being based on a difference between the voltage command value and a measured voltage across the DC-link capacitor.

The converter controller may produce the active feed-forward term in such a way as to follow a real-time switching frequency and be normalized to an average magnitude of 1.

According to at least one embodiment of the present disclosure, it is possible to reduce electromagnetic interference (EMI) noise and improve efficiency.

Furthermore, according to at least one embodiment of the present disclosure, it is possible to minimize input current distortion through active compensation.

Furthermore, according to at least one embodiment of the present disclosure, it is possible to efficiently perform power factor correction

Furthermore, according to at least one embodiment of the present disclosure, it is possible to correct power factor while satisfying harmonic standards.

Meanwhile, various other effects will be directly or implicitly disclosed in the detailed description of embodiments of the present disclosure set forth below.

### BRIEF DESCRIPTION OF THE DRAWINGS

FIG. 1 is a diagram illustrating the configuration of an air conditioner according to one embodiment of the present disclosure.
FIG. 2 is a schematic diagram of the outdoor unit and indoor unit of FIG. 1.
FIG. 3 is a simplified internal block diagram of the air conditioner of FIG. 1.
FIG. 4 is a circuit diagram of a power converting apparatus according to one embodiment of the present disclosure.
FIG. 5 is a circuit diagram of a power converting apparatus according to one embodiment of the present disclosure.
FIG. 6 is a diagram referenced for the description of spread spectrum modulation.
FIGS. 7 and 8 are diagrams referenced in the description of constant duty-cycle control.
FIGS. 9 through 11 are diagrams referenced in the description of variable duty-cycle control.
FIGS. 12a and 12b are internal block diagrams of a converter controller according to one embodiment of this disclosure.
FIG. 13 is a flowchart of a converter control algorithm according to one embodiment of this disclosure.
FIGS. 14 to 17 are diagrams referenced in the description of the converter control algorithm according to one embodiment of this disclosure.

### DETAILED DESCRIPTION OF THE PREFERRED EMBODIMENTS

Hereinafter, the present disclosure will be described in detail with reference to the attached drawings. However, the present disclosure is not limited to these embodiments and may, of course, be modified in various forms.

In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present specification, terms such as first, second, and the like may be used to describe various elements; however, these elements are not limited by such terms. The terms are used solely for distinguishing one element from another.

Meanwhile, the power converting apparatus described in the present specification may be a power converting apparatus provided within a home appliance. The home appliance may include, for example, a refrigerator, a washing machine, a dryer, an air conditioner, a dehumidifier, a cooking appliance, a vacuum cleaner, etc. Hereinafter, the description will focus on an air conditioner among various home appliances.

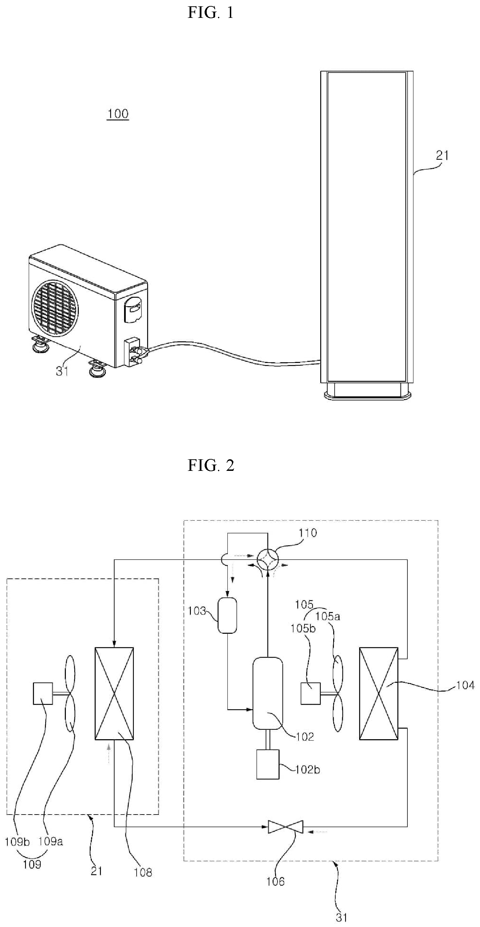

FIG. 1 is a diagram illustrating the configuration of an air conditioner according to one embodiment of the present disclosure.

Referring to FIG. 1, the air conditioner 100 according to the present disclosure may include an indoor unit 21 and an outdoor unit 31 connected to the indoor unit 21.

The indoor unit 21 of the air conditioner may be applied to any of a stand-type air conditioner, a wall-mounted air conditioner, or a ceiling-mounted air conditioner. In the drawing, however, a stand-type indoor unit 21 is illustrated as an example.

Meanwhile, the air conditioner 100 may further include at least one of a ventilation device, an air purification device, a humidification device, and a heater, and may operate in association with the operation of the indoor unit and the outdoor unit.

The outdoor unit 31 may include a compressor (not shown) that compresses supplied refrigerant, an outdoor heat exchanger (not shown) that transfers heat between refrigerant and outdoor air, an accumulator (not shown) that extracts gaseous refrigerant from the supplied refrigerant and supplies it to the compressor, and a four-way valve (not shown) that selects a refrigerant flow path for heating operation. In addition, the outdoor unit 31 may further include multiple sensors, valves, and an oil recovery device, but the description of their configuration will be omitted below.

The outdoor unit 31 may operate the provided compressor and outdoor heat exchanger to compress the refrigerant or perform heat exchange according to settings, thereby supplying the refrigerant to the indoor unit 21. The outdoor unit 31 may be driven by a remote controller (not shown) or by a demand from the indoor unit 21. At this time, as the cooling/heating capacity varies in response to the indoor unit being operated, the number of operating outdoor units and the number of operating compressors installed in the outdoor unit may also vary. In addition, although FIG. 1 illustrates one indoor unit 21 and one outdoor unit 31, the present disclosure is not limited thereto. For example, a plurality of indoor units 21 may be connected to a single outdoor unit 31 through refrigerant pipes.

In this case, the outdoor unit 31 may supply the compressed refrigerant to the connected indoor unit 21.

The indoor unit 21 may receive the refrigerant from the outdoor unit 31 and discharge cooled or heated air to the indoor space. The indoor unit 21 includes an indoor heat exchanger (not shown), an indoor fan (not shown), an expansion valve (not shown) in which the supplied refrigerant expands, and multiple sensors (not shown).

In this case, the outdoor unit 31 and the indoor unit 21 may be connected with wires or wirelessly to transmit and receive data to and from each other, and the outdoor unit and the indoor unit may be connected to a remote controller (not shown) with wires or wirelessly to operate under the control of the remote controller (not shown).

A remote control (not shown) may be connected to the indoor unit 21 to input a user's control command to the indoor unit 31 and to receive and display status information of the indoor unit. In this case, the remote control may communicate with the indoor unit either through wired or wireless communication depending on the type of connection to the indoor unit 31.

FIG. 2 is a schematic diagram of the outdoor unit and indoor unit of FIG. 1.

Referring to FIG. 2, the air conditioner 100 is largely divided into an indoor unit 21 and an outdoor unit 31.

The outdoor unit 31 may include a compressor 102 that compresses refrigerant, a compressor motor 102b that drives the compressor, an outdoor heat exchanger 104 that dissipates heat from the compressed refrigerant, an outdoor blower 105 including an outdoor fan 105a disposed on one side of the outdoor heat exchanger 104 to promote heat dissipation of the refrigerant and a motor 250 that rotates the outdoor fan 105a, an expansion mechanism or expansion valve 106 that expands the condensed refrigerant, a cooling/heating switching valve or four-way valve 110 that changes the flow path of the compressed refrigerant, and an accumulator 103 that temporarily stores vaporized refrigerant, removes moisture and foreign substances, and supplies refrigerant at a constant pressure to the compressor.

The indoor unit 21 includes an indoor heat exchanger 108 disposed indoors to perform cooling and heating functions and an indoor blower 109 including an indoor fan 109a disposed on one side of the indoor heat exchanger 108 to promote heat dissipation of the refrigerant, and a motor 109b for rotating the indoor fan 109a.

At least one indoor heat exchanger 108 may be installed. The compressor 102 may be at least one of an inverter compressor and a constant-speed compressor.

Moreover, the air conditioner 100 may be configured as a cooling unit for cooling an indoor space, or as a heat pump capable of cooling or heating the indoor space.

Meanwhile, the outdoor fan 105a in the outdoor unit 31 may be driven by an outdoor fan driving unit 200 that drives the motor 250.

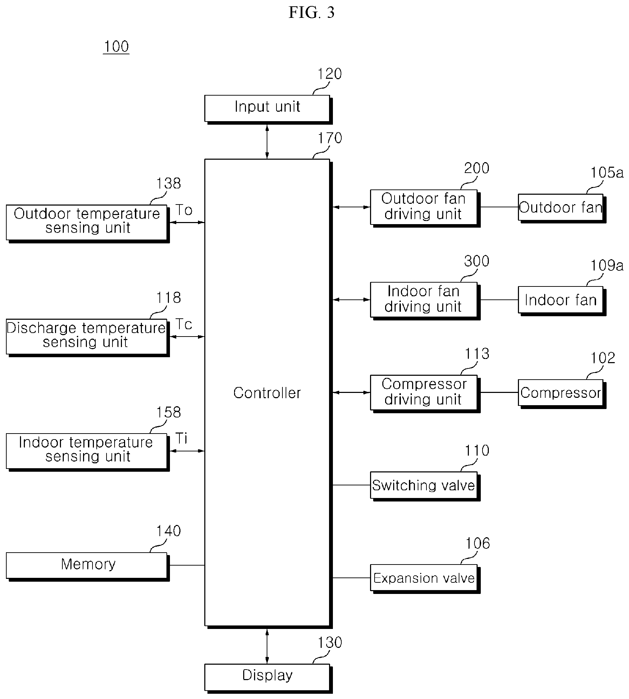

Meanwhile, the compressor 102 in the outdoor unit 31 may be driven by a compressor motor driving unit (113 of FIG. 3) that drives a compressor motor (not shown).

Meanwhile, the indoor fan 109a in the indoor unit 21 may be driven by an indoor fan driving unit 300 that drives the indoor fan motor 109b.

Hereinafter, the outdoor fan driving unit 200 may also be referred to as an outdoor fan driving device. In addition, the indoor fan driving unit 300 may also be referred to as an indoor fan driving device.

FIG. 3 is a simplified internal block diagram of the air conditioner of FIG. 1.

Referring to FIG. 3, the air conditioner 100 may include a compressor 102, an outdoor fan 105a, an indoor fan 109a, a controller 170, a discharge temperature sensing unit 118, an outdoor temperature sensing unit 138, an indoor temperature sensing unit 158, and a memory 140. In addition, the air conditioner 100 may further include a compressor driving unit 113, an outdoor fan driving unit 200, an indoor fan driving unit 300, a switching valve 110, an expansion valve 106, a display 130, and an input unit 120.

The compressor 102, the outdoor fan 105a, and the indoor fan 109a may operate as described above with reference to FIG. 2.

The input unit 120 may be provided with a plurality of operation buttons to transmit to the controller 170 an input signal for a target operating temperature of the air conditioner.

The display 130 may display the operating state of the air conditioner 100. For example, the display 130 may include a display means for outputting the operating state of the indoor unit 21, and may display operating status and errors.

The display 130 may also display the connection state between the indoor unit 21 and the outdoor unit 31. For example, the display 130 may be provided with a light emitting diode (LED), which may be turned on when the connection state of a communication line and/or power line is normal, and may be turned off when the connection state of the communication line and/or power line is abnormal.

The memory 140 may store data necessary for the operation of the air conditioner 100.

The discharge temperature sensing unit 118 may detect a refrigerant discharge temperature (Tc) from the compressor 102, and transmit a signal for the detected refrigerant discharge temperature (Tc) to the controller 170.

The outdoor temperature sensing unit 138 may detect an outdoor temperature (To), which is the temperature around the outdoor unit 31 of the air conditioner 100, and may transmit a signal for the detected outdoor temperature (To) to the controller 170.

The indoor temperature sensing unit 158 may detect an indoor temperature (Ti), which is the temperature around the indoor unit 21 of the air conditioner 100, and may transmit a signal for the detected indoor temperature (Ti) to the controller 170.

The controller 170 may control the operation of the air conditioner 100 based on at least one of the detected refrigerant discharge temperature (Tc), the detected outdoor temperature (To), the detected indoor temperature (Ti), and the input target temperature. For example, the controller 170 may calculate a final target superheat degree and control the air conditioner 100 to operate accordingly.

Meanwhile, as illustrated in the drawing, the controller 170 may control the compressor driving unit 113, the outdoor fan driving unit 200, and the indoor fan driving unit 300, in order to control the operation of the compressor 102, the indoor fan 109a, and the outdoor fan 105a, respectively.

For example, the controller 170 may output respective speed command signals to the compressor driving unit 113, the outdoor fan driving unit 200, and the indoor fan driving unit 300 based on the target temperature.

Based on the respective speed command signals, the compressor motor (not shown), the motor 250, and the indoor fan motor 109b may operate at their respective target rotational speeds.

Meanwhile, in addition to controlling the compressor driving unit 113, the outdoor fan driving unit 200, or the indoor fan driving unit 300, the controller 170 may control the overall operation of the air conditioner 100.

For example, the controller 170 may control the operation of the cooling/heating switching valve or four-way valve 110. Alternatively, the controller 170 may control the operation of the expansion mechanism or expansion valve 106.

Meanwhile, the air conditioner may further include a power supply unit (not shown) that supplies power to each unit such as the compressor 102, the outdoor fan 105a, the indoor fan 109a, the controller 170, and the memory 140.

The power supply unit may convert input power into power required for driving each unit and supply it. Therefore, at least a part of the configuration of the power supply unit may be referred to as a power converting apparatus.

In addition, the power converting apparatus may be implemented as a motor driving device that converts power to drive various motors.

The power converting apparatus described below may be provided in the driving units 200, 300, and 113, power supply unit, etc. of the home appliance.

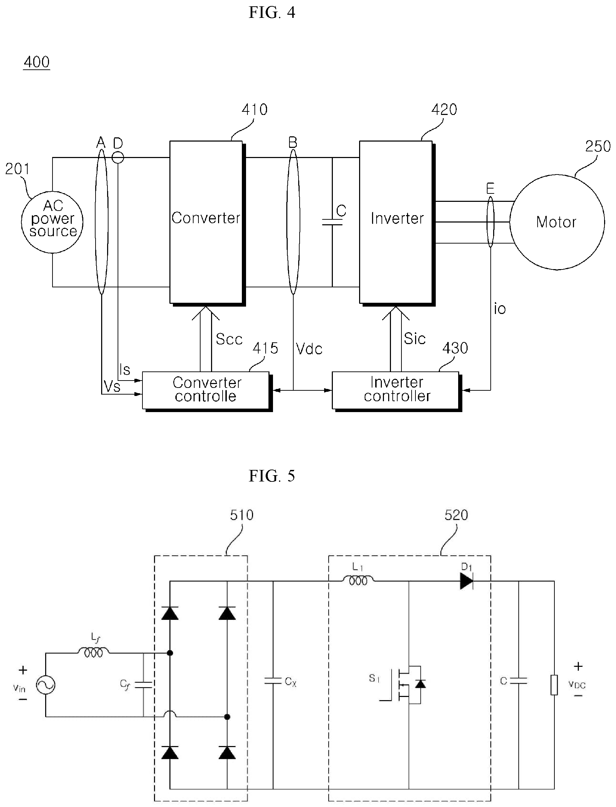

FIG. 4 is a circuit diagram of a power converting apparatus according to one embodiment of the present disclosure.

Referring to FIG. 4, the power converting apparatus 400 according to one embodiment of the present disclosure may include a converter 410 that converts input power into direct current power and outputs it to a DC link, a converter controller 415, and a DC-link capacitor (C) connected to the DC link.

In addition, the power converting apparatus 400 may include an inverter 420 having a plurality of switching elements for converting the DC power from the capacitor (C) into alternating current, and an inverter controller 430 for controlling the inverter 420.

The power converting apparatus 400 may further include at least one of an input voltage detector (A), a DC-link voltage detector (B), an input current detector (D), and an output current detector (E).

Meanwhile, in the description below with reference to FIG. 4, an example is illustrated in which the power converting apparatus 400 is used as a motor driving device that converts power input from a commercial AC power source 201 and supplies it to the motor 250. In this case, the power converting apparatus 400 may be referred to as a motor driving device, a motor driving unit, etc. Alternatively, the power converting apparatus 400 may convert the input power and supply it to a load. Although FIG. 4 mainly describes an embodiment in which the power converting apparatus 400 is implemented as a motor driving device, the present disclosure is not limited to this.

The converter 410 may convert the commercial AC power 201 into DC power and output it. To this end, the converter 410 may be provided with a rectifier (510 of FIG. 5). In addition, it is also possible to further provide a reactor (not shown).

A smoothing capacitor (C) is connected to an output terminal of the converter 410. The capacitor (C) may store the power output from the converter 410. Since the power output from the converter 410 is DC power, it may be referred to as a DC-link capacitor.

The inverter 420 may output the converted AC power to the motor 250.

Referring to FIG. 4, the input voltage detector (A) may detect an input voltage (Vs) from the commercial AC power source 201.

The input voltage detector (A) may include a resistor element, an OP AMP, and the like for voltage detection. The detected input voltage (Vs) may be applied to the converter controller 415 and the inverter controller 430 as a discrete signal in the form of a pulse.

Meanwhile, the input voltage detector (A) may also detect the peak voltage and zero-crossing point of the input voltage.

The input current detector (D) may detect an input current (is) supplied from the commercial AC power source 201. For this purpose, a current transformer (CT), a shunt resistor, etc. may be used as the input current detector (D). The detected input current (is) may be inputted to the converter controller 415 and the inverter controller 430 for power consumption calculation as a discrete signal in the form of a pulse.

Next, a capacitor (C) may be provided at the output terminal of the converter 410 to store or smooth the power converted by the converter 410. The two terminals of the capacitor (C) may be referred to as a DC link. Therefore, the capacitor (C) may also be referred to as a DC-link capacitor.

Meanwhile, the converter controller 415 may generate a converter switching control signal (Scc) based on the input voltage (Vs), the input current (Is), and a DC-link voltage (Vdc) and output the signal to the converter 410.

The DC-link voltage detector (B) may detect the DC-link voltage (Vdc), which is the voltage across the two terminals of the smoothing capacitor (C). To this end, the DC-link voltage detector (B) may include a resistor element, an amplifier, etc. The detected DC-link voltage (Vdc) may be inputted to the converter controller 415 and the inverter controller 430 as a discrete signal in the form of a pulse.

The inverter 420 may drive the motor 250. To this end, the inverter 420 may include a plurality of inverter switching elements, and by the on/off operation of the switching elements, the smoothed DC power (Vdc) may be converted into three-phase AC power of a predetermined frequency and outputted to the three-phase synchronous motor 250.

The inverter 420 may include three pairs of upper-arm switching elements and lower-arm switching elements, each pair being connected in series, and the three pairs being connected in parallel with each other. A diode may be connected in reverse parallel to each switching element.

The switching elements in the inverter 420 may be turned on/off based on inverter switching control signals (Sic) from the inverter controller 430. As a result, three-phase AC power having a predetermined frequency may be outputted to the three-phase synchronous motor 250.

The inverter controller 430 may control the switching operation of the inverter 420. To this end, the inverter controller 430 may receive the output current (iₒ) detected by the output current detector (E).

The inverter controller 430 may output an inverter switching control signal (Sic) to the inverter 420 in order to control the switching operation of the inverter 420. The inverter switching control signal (Sic) may be generated and outputted as a pulse width modulation (PWM) switching control signal, based on the output current value (iₒ) detected by the output current detector (E),

The output current detector (E) may detect the output current (iₒ) flowing between the inverter 420 and the motor 250. That is, it may detect the current flowing into the motor 250. The output current detector (E) may detect currents in all phases (ia, ib, ic), or alternatively, may detect output currents in two phases by using three-phase balance.

The output current detector (E) may be positioned between the inverter 420 and the motor 250, and a current transformer (CT), a shunt resistor, etc. may be used for current detection.

When the shunt resistor is used, three shunt resistors may be positioned between the inverter 420 and the synchronous motor 250, or one end of each shunt resistor may be connected to the three lower-arm switching elements of the inverter 420. Alternatively, two shunt resistors may be used by utilizing three-phase balance. Furthermore, when a single shunt resistor is used, the shunt resistor may be disposed between the above-described capacitor (C) and the inverter 420.

The detected output current (iₒ) may be applied to the inverter controller 430 as a discrete signal in the form of a pulse, and based on the detected output current (iₒ), an inverter switching control signal (Sic) may be generated.

Meanwhile, the motor 250 may be a three-phase motor. The motor 250 may include a stator and a rotor, and when three-phase AC power of a predetermined frequency is applied to the stator coils of each phase (a, b, and c phases), the rotor may rotate.

Such a motor 250 may include, for example, a surface-mounted permanent magnet synchronous motor (SMPMSM), an interior permanent magnet synchronous motor (IPMSM), and a synchronous reluctance motor (SynRM). Among these, the SMPMSM and the IPMSM are permanent magnet synchronous motors (PMSM) employing permanent magnets, whereas the SynRM is characterized by the absence of permanent magnets.

Meanwhile, the converter 410 and the inverter 420 may each include a switching element. For example, the converter 410 and the inverter 420 may include an IGBT switching element.

FIG. 5 is a circuit diagram of a power converting apparatus according to one embodiment of the present disclosure.

Referring to FIGS. 4 and 5, the power converting apparatus 400 according to one embodiment of the present disclosure may include a converter 410 that converts input AC power into DC power and outputs it, a smoothing capacitor (C) that smooths and stores the output power of the converter 410, and an inverter 420 having a plurality of switching elements that converts the DC power from the smoothing capacitor (C) into AC power to drive a motor.

The converter 410 may include a switching element (S1), and the converter controller 415 may control the switching element (S1).

According to an embodiment, the converter 410 may include an inductor (L1), a diode (D1) connected to the inductor (L1), and a switching element (S1) connected between the inductor (L1) and the diode (D1). The converter 410 may include the inductor (L1) and the diode (D1) connected in series, and the switching element (S1) may be connected between the inductor (L1) and the diode (D1).

Meanwhile, the converter 410 may include a rectifier 510 that rectifies the input AC power and outputs it to the converter, and a boost converter 520 disposed between the rectifier 510 and the smoothing capacitor (C) to boost and output the rectified power from the rectifier 510.

The boost converter 520 may include an inductor (L1) and a diode (D1) connected in series between the rectifier 510 and the inverter 420, and a switching element (S1) connected between the inductor (L1) and the diode (D1). When the switching element (S1) is turned on, energy may be stored in the inductor (L1), and when the switching element (S1) is turned off, the energy stored in the inductor (L1) may be outputted through the diode (D1).

In particular, in a power converting apparatus employing a low-capacitance DC-link capacitor (C), the boost converter 520 may output a voltage that is boosted, i.e., offset, by a certain voltage.

The converter controller 415 may control the turn-on timing of the switching element (S1) in the boost converter 520. Accordingly, the converter controller 415 may output a converter switching control signal (Scc) for the turn-on timing of the switching element (S1). The converter switching control signal (Scc) may be a pulse width modulation (PWM) switching control signal that controls the duty cycle of the switching element (S1).

The boost converter 520 may shape the input current into a sine wave to correct power factor and eliminate harmonics. The boost converter 520 may include the inductor (L1) and the switching element (S1), and may correct the power factor of an AC power source. The reactor (L1) may store energy, and through the switching operation of the switching element (S1), energy may be charged into and discharged from the reactor (L1), thereby improving the input current waveform.

In this case, power factor correction (PFC) control may be performed by the control signal of the converter controller 415. For example, the converter controller 415 may turn on or off the power factor correction control function by controlling the switching operation of the switching element (S1).

The converter 410 may correct the power factor of the supplied power while converting the input AC power into DC power.

The input voltage detector (A) may detect the input voltage (Vs) from the commercial AC power source 201, and the converter controller 415 may control the output voltage of the converter 410, i.e., the DC-link voltage, based on the input voltage (Vs). In addition, the converter controller 415 may control the DC-link voltage according to the load of the power converting apparatus 400.

The converter controller 415 may generate a turn-on duty cycle based on a DC-link voltage command value (Vdc, ref) and a measured DC-link voltage (Vdc), and may generate and output a converter switching control signal (Scc) based on the turn-on duty cycle. The switching element (S1) in the boost converter 520 may operate based on the converter switching control signal (Scc).

According to an embodiment, the converter 410 may further include noise filters such as an X capacitor (Cx) for removing differential-mode noise and a Y capacitor (not shown) for removing common-mode noise. In addition, noise filters (Cf, Lf) may also be disposed at the front end of the rectifier 510.

The converter controller 415 may perform spread spectrum modulation (SSM), in which the switching frequency of the switching element (S1) is varied within a designated range. The spread spectrum modulation technique spreads EMI noise across the bandwidth by varying the switching frequency within a specified range.

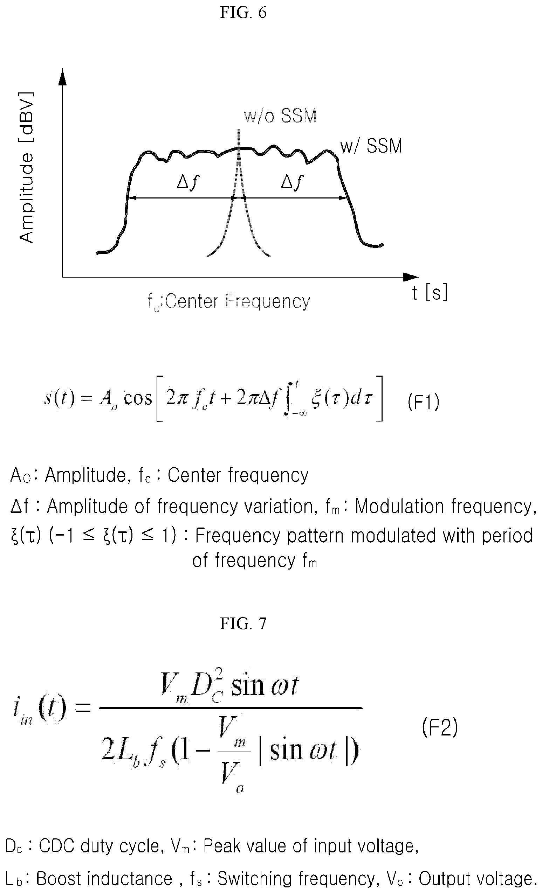

FIG. 6 is a diagram referenced for the description of spread spectrum modulation.

Equation F1 of FIG. 6 represents the frequency modulation of spread spectrum modulation (SSM). Here, Ao denotes the amplitude, fc denotes the center frequency, Δ f denotes the amplitude of frequency variation, fm denotes the modulation frequency, and 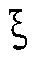 ( τ ) (-1 ≤ 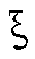 ( τ ) ≤ 1) represents a frequency pattern modulated with a period of frequency (fm).

Referring to FIG. 6, when spread spectrum modulation (SSM) is applied to a power converting apparatus operating at a fixed frequency, the EMI noise generated at the center frequency (a fixed variable) is dispersed by the amplitude of frequency variation around the center frequency, thereby reducing the EMI peak value.

Spread spectrum modulation (SSM) enables EMI reduction without additional hardware, but it involves a trade-off that induces side effects in converter control. Such characteristics are also observed in power factor correction circuits.

Power Factor Correction (PFC) aligns the input voltage and current in phase and reduces the total harmonic distortion of the input current, thereby enabling compliance with regulations such as IEC 61000-3-2. In particular, the boost converter 520 can perform the aforementioned role and additionally provide DC-link voltage, making it preferred in industry.

The boost converter 520 can operate in three modes (CCM, CrM, and DCM). Continuous Conduction Mode (CCM), Critical Conduction Mode (CrM), and Discontinuous Conduction Mode (DCM). Among these, the DCM operating region offers advantages such as lower switching losses, requiring only input and output voltage measurements for ease of control design, and low-cost design.

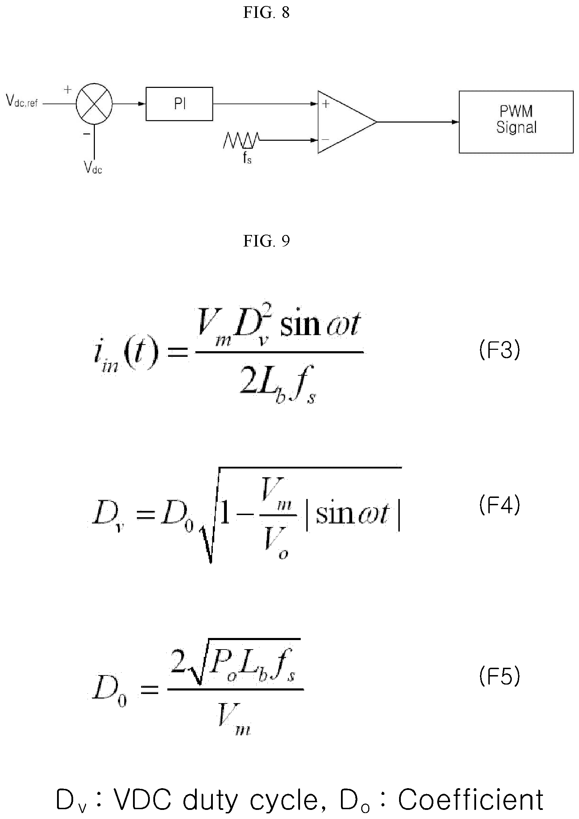

FIGS. 7 and 8 are diagrams referenced in the description of constant duty-cycle control, and FIGS. 9 through 11 are diagrams referenced in the description of variable duty-cycle control.

The conventional control technique used in the DCM boost converter 520 is Constant Duty-Cycle Control (CDC). In CDC, the PWM waveform is controlled with a constant duty cycle during a power frequency period, thereby achieving output voltage control and aligning the input voltage and current in phase.

Equation F2 in FIG. 7 represents the relationship between the input current and voltage in constant duty-cycle control. Here, Dc denotes the CDC duty cycle, Vm denotes the peak value of the input voltage, Lb denotes the boost inductance of the inductor (L1), fs denotes the switching frequency, and Vo denotes the output voltage.

FIG. 8 illustrates a block diagram of constant duty-cycle control.

Referring to FIG. 8, the difference between the DC-link voltage command value (Vdc, ref) and the measured voltage (Vdc) across the DC-link capacitor (c), i.e., an error signal, is fed into the Proportional-Integral (PI) controller.

The output value of the PI controller is compared with the switching frequency (fs), and based on the comparison result, the PWM converter switching control signal (Scc) may be generated. For example, if the output value of the PI controller is greater than the switching frequency (fs), it can be set to '1'.

In constant duty-cycle control, the switching frequency (fs) is fixed and therefore does not affect the phase.

The constant duty-cycle control technique can achieve high power factor in countries that use low input voltages of 85~110 V, but it has the drawback of being difficult to secure a high power factor in countries that use higher input voltages such as 220~230 V.

To address this issue, the Variable Duty-Cycle Control (VDC) method was developed. In VDC, the duty cycle varies during a power frequency period, and control is performed accordingly. Compared with constant duty-cycle control, VDC can further improve the input voltage power factor.

Equation F3 in FIG. 9 represents the relationship between the input voltage and current when the VDC technique is applied. Here, Dv denotes the VDC duty cycle, Vm denotes the peak value of the input voltage, Po denotes the load, Lb denotes the boost inductance of inductor (L1), and fs denotes the switching frequency.

Meanwhile, Equation F4 in FIG. 9 represents the DC duty cycle Dv, and Equation F5 represents the coefficient Do of Equation F4. Here, Vo denotes the output voltage.

In Equation F3, only the sine wave (sin wt) carries phase information, so the input current and input voltage naturally become in phase. Theoretically, to achieve an ideal power factor, the coefficient Do should have the value given in Equation F5. However, since load and inductance are not constant in power converting apparatuses, Equation F3 is determined through the output of the PI controller without a feed-forward term.

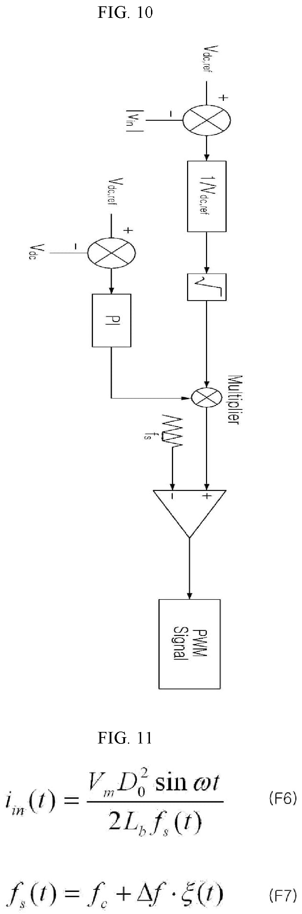

FIG. 10 illustrates a block diagram of variable duty-cycle control.

Referring to FIG. 10, the difference between the DC-link voltage command value (Vdc, ref) and the measured voltage (Vdc) across the DC-link capacitor (c), i.e., an error signal, is fed into the PI controller.

To eliminate disturbances caused by the input voltage (Vs) of the boost converter 520 and the DC-link voltage (Vdc), variable duty-cycle control feed-forward compensation can be performed.

Based on the difference between the voltage command value and the input voltage, the variable duty-cycle control feed-forward term is calculated, and the product of the calculated variable duty-cycle control feed-forward term and the output value of the PI controller is fed into a comparator.

In the comparator, the compensated output (the product of the calculated variable duty-cycle control feed-forward term and the output value of the PI controller) is compared with the switching frequency (fs), and based on the comparison result, the PWM converter switching control signal (Scc) may be generated.

Meanwhile, the output-voltage PI controller used in the boost converter 520 is designed with a significantly reduced control bandwidth in order to minimize the 120 Hz line-frequency noise component observed in the output voltage from entering the controller input.

When the control bandwidth is reduced, the dynamic characteristics of the converter decrease, resulting in a somewhat slower return to steady state during input/output voltage variations or load changes. However, as can be seen from Equation F3, all variables except the sine wave (sin wt) exhibit time-invariant characteristics, so once steady state is reached, input current distortion does not occur.

However, when spread spectrum modulation (SSM) is applied, the input current changes as shown in Equations F6 and F7 of FIG. 11, which include the parameters of SSM. As the time-varying variable fs(t) is added, the controller needs to compensate for it. However, since the modulation frequency (fm) of fs(t) lies outside the controller's bandwidth, it is difficult to perform compensation by using the PI controller alone, and input current distortion occurs even in steady state.

In this disclosure, active feed-forward compensation is performed to eliminate the time-varying variable (fs(t)) added to the input current in response to the performing of spread spectrum modulation, thereby minimizing input current distortion. By adding an active compensator with real-time switching frequency information incorporated therein, the disclosure can minimize the input current distortion that occurs when spread spectrum modulation (SSM) is applied.

By minimizing input current distortion, overall power factor can be improved, total harmonic distortion of the input current can be reduced, and electromagnetic interference (EMI) can be mitigated.

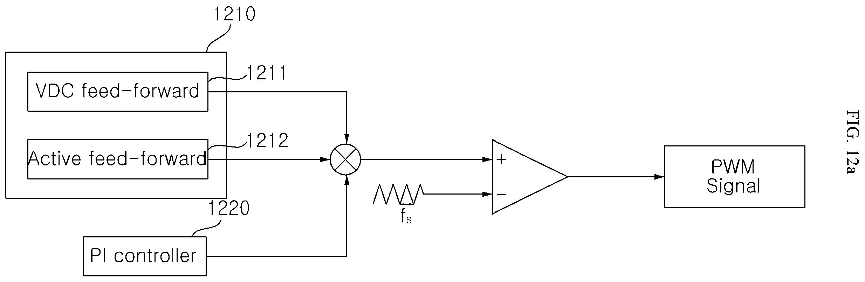

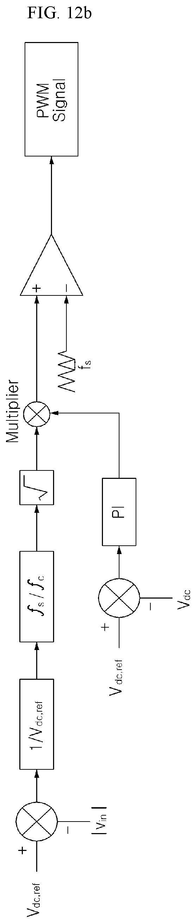

FIGS. 12a and 12b are internal block diagrams of a converter controller according to one embodiment of this disclosure.

FIGS. 12a shows a control block diagram according to one embodiment, and FIG. 12b shows a VDC control block diagram of FIG 10 with an active compensator added thereto.

The converter controller 415 may eliminate the time-varying variable (fs(t)) added to the input current in response to the performing of spread spectrum modulation.

The time-varying variable (fs(t)) may be a switching frequency that changes over time. The converter controller 415 may perform active compensation based on the real-time switching frequency information of the switching element (S1).

Referring to FIGS. 12a and 12b, the VDC control block diagram includes an active compensator 1212 with a feed-forward term (K(t)) added to minimize input current distortion when SSM is applied.

Through the active compensator 1212, this disclosure can minimize input current distortion caused by SSM, while achieving EMI reduction, output voltage control, and input current control.

The converter controller 415 may include a compensation unit 1210 that performs feed-forward compensation.

The compensation unit 1210 may include a VDC compensator 1211, which performs conventional VDC feed-forward compensation, and an active compensator 1212, which performs active feed-forward compensation to eliminate the time-varying variable (fs(t)) caused by spread spectrum modulation.

The converter controller 415 may calculate a variable duty-cycle control feed-forward term based on the difference between the voltage command value and the input voltage (Vin), calculate an active feed-forward term (K(t)) based on the time-varying variable (fs(t)), and calculate a feed-forward output value as the product of the variable duty-cycle control feed-forward term and the active feed-forward term (K(t)).

The active feed-forward term (K(t)) may be a value that follows the real-time switching frequency and is normalized to an average magnitude of 1. The converter controller 415 may produce the active feed-forward term (K(t)) in such a way as to follow the real-time switching frequency and be normalized to an average magnitude of 1.

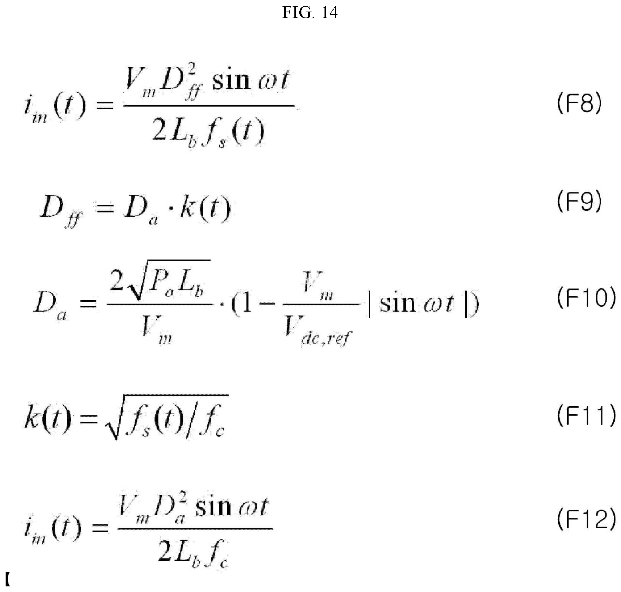

The active feed-forward term (K(t)) may be the square root of the time-varying variable divided by the center frequency. More precisely, the active feed-forward term (K(t)) may be given by Equation F11 of FIG. 14.

The variable duty-cycle control feed-forward term may be the output of the VDC compensator 1211. The active feed-forward term may be the output of the active compensator 1212. The feed-forward output value may be the output of the compensation unit 1210.

The converter controller 415 may calculate the duty cycle by multiplying the output value of the proportional-integral (PI) controller 1220, which is based on the difference between the voltage command value (Vdc, ref) and the measured voltage (Vdc) across the DC-link capacitor (C), with the feed-forward output value.

In addition, the converter controller 415 may calculate the duty cycle by multiplying the output of the VDC compensator 1211, the output of the active compensator 1212, and the output value of the PI controller 1220.

The converter controller 415 may generate a final switching control signal by comparing the calculated duty cycle with the switching frequency (fs).

The converter controller 415 may operate the switching element (S1) in a discontinuous conduction mode (DCM).

The converter controller 415 may perform variable duty-cycle control.

The converter controller 415 may control the boost converter 520. By using the boost converter 520, the input current (Is) can be controlled, thereby improving the input power factor. In addition, electromagnetic interference (EMI) can be reduced by applying spread spectrum modulation.

Referring to FIGS. 12a and 12b, in the conventional VDC control technique, an active feed-forward term (K(t))=√ (fs(t)/fc) is added. With the addition of the active feed-forward term, the time-varying variable (fs(t)) can be eliminated from the input current. Accordingly, the phase of the input current follows only the sine wave (sin wt), so even when spread spectrum modulation is applied, the distortion caused thereby can be compensated.

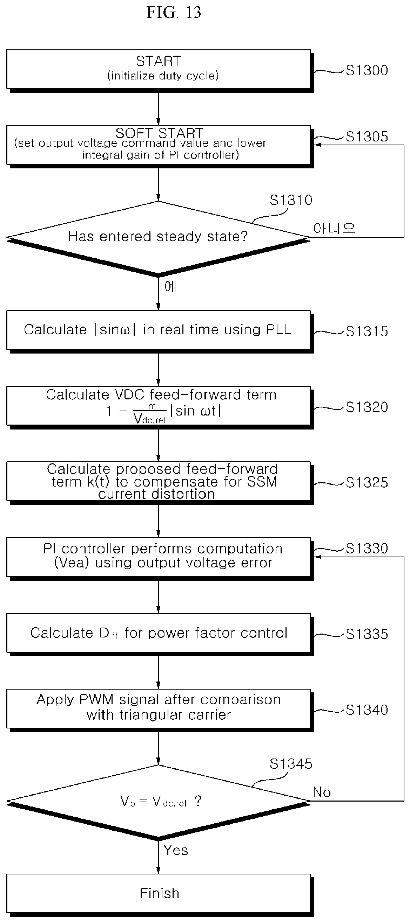

FIG. 13 is a flowchart of a converter control algorithm according to one embodiment of this disclosure, and FIGS. 14 to 17 are diagrams referenced in the description of the converter control algorithm according to one embodiment of this disclosure.

Referring to FIG. 13, initially at start up, the converter controller 415 initializes the duty cycle to zero (S1300). Next, the converter controller 415 repeats a soft-start sequence (S1315) until it enters a steady state (S1310).

Soft start can prevent overshoot from occurring. For example, soft start may involve setting an output voltage command value to a predetermined initial value and lowering the integral gain of the PI controller.

When the output voltage first reaches the output voltage command value, the converter controller 415 completes the soft start and enters into normal-state control (S1310).

Meanwhile, the converter controller 415 may include a phase detector (not shown) for detecting the phase of the input voltage.

The phase detector may extract the phase of the input voltage (Vs). In addition, it may extract the magnitude of the input voltage (Vs) and the frequency of the input voltage (Vs). To achieve this, the phase detector may be equipped with a phase-locked loop (PLL).

After entering the steady state, the converter controller 415 may calculate the phase of the input voltage (Vs) in real time using the phase-locked loop (S1315). The converter controller 415 may calculate the absolute value of the real-time sine wave (sin wt) by using the phase-locked loop.

Next, the converter controller 415 performs feed-forward term calculations (S1320, S1325).

The converter controller 415 calculates the VDC feed-forward term used in the VDC control technique (S1320). The converter controller 415 may calculate a variable duty-cycle control feed-forward term based on the phase of the input voltage. The converter controller 415 may calculate the VDC feed-forward term based on the absolute value of the sine wave (sin wt), the voltage command value (Vdc, ref), and the input voltage peak value (Vm).

In addition, the converter controller 415 performs the calculation of the active feed-forward term (K(t)) to compensate for current distortion caused by spread spectrum modulation (SSM) (S1325). The active feed-forward term (K(t)) is given by Equation F11 of FIG. 14.

The PI controller 1220 may output a value (Vea) based on an output voltage error (S1330).

The converter controller 415 may obtain the duty cycle (Dff) by multiplying the calculated VDC feed-forward term, the active feed-forward term (K(t)), and the PI output value (Vea) (S1335). Through this, both output voltage control and power factor control are achieved.

The input current with the active feed-forward term added thereto can be expressed by Equation F8 in FIG. 14. Equation F9 in FIG. 14 represents the duty cycle (Dff), Equation F10 represents the coefficient (Da), and Equation F11 represents the active feed-forward term (K(t)).

Referring to the equations, the duty cycle (Dff) is the product of the coefficient Da and the active feed-forward term (K(t)). The coefficient Da may be the product of the PI controller output value and the VDC feed-forward term. Therefore, the duty cycle (Dff) may be the product of the PI controller output value, the VDC feed-forward term, and the active feed-forward term (K(t)).

Meanwhile, a PWM signal is applied by comparing with a triangular carrier (S1340) until the output voltage (Vo) of the converter 410 becomes equal to the voltage command value (Vdc, ref) (S1345), and the control process is performed.

When designed using Equations F8 to F11, the input current is expressed by Equation F12. Through this, even when spread spectrum modulation (SSM) is applied to a DCM boost PFC, a high power factor can be achieved.

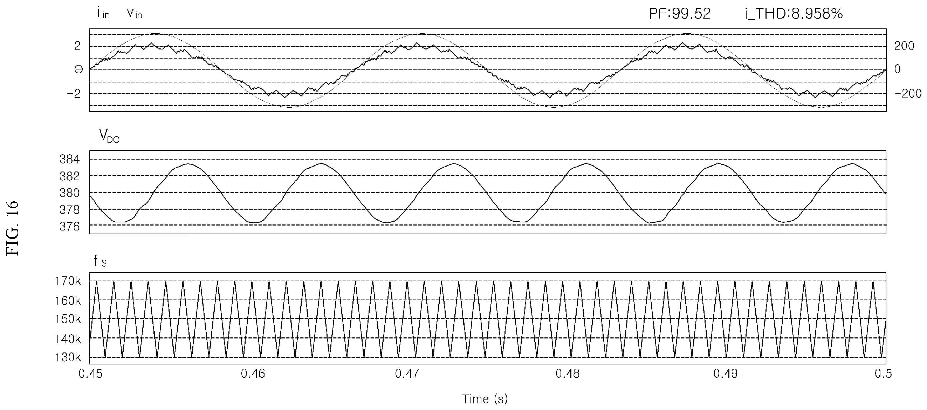

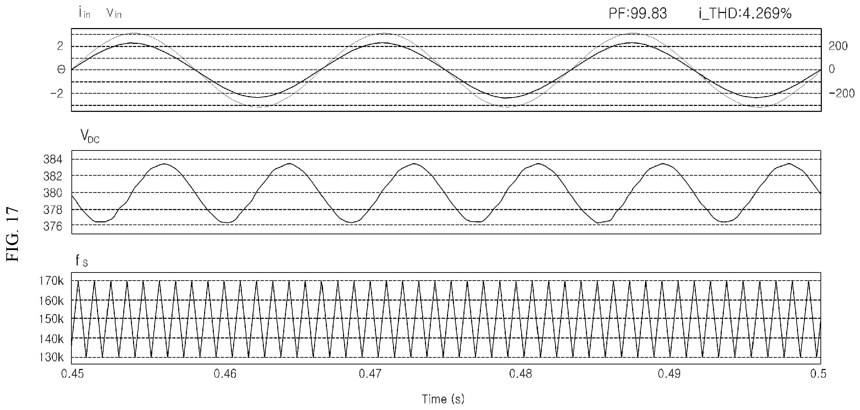

FIGS. 16 and 17 show simulation results. FIGS. 16 and 17 illustrate steady state waveforms of a 300W boost PFC under simulation testing.

FIG. 16 shows the waveform, power factor, and input current total harmonic distortion when SSM is applied to the VDC control technique. FIG. 17 shows the waveform, power factor, and input current when SSM is applied to a proposed control technique including active compensation.

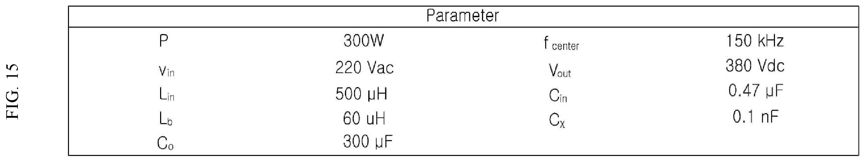

The DCM boost PFC assumes a situation in which an input voltage (Vin) of 220 VAC is supplied from a grid and an output voltage (Vo) of 380 VDC is supplied to a resistive load. The design specifications are shown in FIG. 15. The parameters in FIG. 15 illustrate examples of the center frequency, boost inductance (Lb), LC values (Lin, Cin) of the noise filter, the X capacitor (Cx), and the DC-link capacitor (C).

FIGS. 16 and 17 apply spread spectrum modulation (SSM) with a triangular modulation pattern having Δ f=20kHz and fm=960Hz. The boost PFC receives 220 VAC (peak 311 V) and controls the output voltage (Vo) to 380 VDC. The PI controller is designed with a control bandwidth of approximately 20 Hz.

FIG.16 shows the input voltage, input current, output voltage, and switching frequency waveforms when spread spectrum modulation (SSM) is applied to the conventional control technique. In this case, the input current is distorted due to SSM, resulting in a lower power factor. The power factor is 99.52, and the input current total harmonic distortion is 8.958%.

FIG. 17 shows the waveforms after applying the active compensator. Compared to the previous case, it can be observed that the added feed-forward term provides real-time compensation, thereby reducing current distortion. The power factor is 99.83, and the input current total harmonic distortion is 4.269%.

A power converting apparatus and a home appliance including the same according to the present disclosure are not limited to the configurations and methods of the embodiments described above. Rather, the embodiments may be selectively combined in whole or in part so as to allow various modifications.

## Claims

1. A power converting apparatus comprising:
a rectifier (510) configured to rectify input AC power;
a converter (520) including a switching element (S1);
a DC-link capacitor (C) connected to an output terminal of the converter (520); and
a converter controller (415) configured to control the switching element (S1),
wherein the converter controller (415) performs spread spectrum modulation (SSM) in which a switching frequency of the switching element (S1) is varied within a designated range, and performs active feed-forward compensation to eliminate a time-varying variable added to the input current in response to the performing of the spread spectrum modulation.

2. The power converting apparatus of claim 1, wherein the converter controller (415) calculates a variable duty-cycle control feed-forward term based on a difference between a voltage command value and an input voltage, calculates an active feed-forward term including the time-varying variable, and calculates a feed-forward output value by multiplying the variable duty-cycle control feed-forward term and the active feed-forward term.

3. The power converting apparatus of claim 2, wherein the converter controller (415) calculates a duty cycle by multiplying a proportional-integral (PI) controller output value with the feed-forward output value, the PI controller output value being based on a difference between the voltage command value and a measured voltage across the DC-link capacitor (C).

4. The power converting apparatus of claim 3, wherein the converter controller (415) sets an initial value of the voltage command value and lowers an integral gain of the proportional-integral controller.

5. The power converting apparatus of claim 2, 3, or 4, wherein the active feed-forward term is a value that follows a real-time switching frequency and is normalized to an average magnitude of 1.

6. The power converting apparatus of any one of claims 2 to 5, wherein the active feed-forward term is the square root of the time-varying variable divided by a center frequency.

7. The power converting apparatus of any one of claims 2 to 6, wherein the converter controller (415) includes a phase detector configured to detect a phase of the input voltage, and calculates the variable duty-cycle control feed-forward term based on the phase of the input voltage.

8. The power converting apparatus of any one of claims 1 to 7, wherein the converter (520) further includes an inductor (L1) and a diode (D1) connected to the inductor (L1),
and wherein the converter (520) is a boost converter (520) in which the switching element (S1) is connected between the inductor (L1) and the diode (D1).

9. The power converting apparatus of any one of claims 1 to 8, wherein the converter controller (415) operates the switching element (S1) in a discontinuous conduction mode.

10. The power converting apparatus of any one of claims 1 to 9, wherein the converter controller (415) performs variable duty-cycle control (VDC) in which the duty cycle is varied during a power frequency period.

11. A home appliance comprising the power converting apparatus (400) according to any one of claims 1 to 10.
